# EUROPEAN PATENT APPLICATION

(11) **EP 1 363 383 A2**
(43) Date of publication of application: **19.11.2003**
(21) Application number: 03010013.5
(22) Date of filing: 02.05.2003
(51) Int. Cl.: H02K 11/04, H02K 15/12

(54) **Control circuit equipped with heating or cooling devices, particularly for direct current fans**

(30) Priority: 17.05.2002 IT TO20020419
(71) Applicant: COSMOS ITALIA S.R.L., 20121 Milano (IT)
(72) Inventor: Zangirolami, Marco, 28040 Borgoticino (NO) (IT)
(74) Representative: Garavelli, Paolo

(57) **Abstract**

A control circuit (1) is disclosed, particularly for direct current fans (4), comprising a basic circuit (5) equipped with a plurality of external wires (7) and containing at least one microprocessor (9); and a plurality of active components (11), (13) and (15), like driving transistors, diodes and magnetic or optical sensors (for example Hall-effect type or photodiodes). The circuit further comprises at least one heating (16) or cooling element installed in narrow contact with the microprocessor (9) and/or the active components (11, 13, 15).

## Description

The present invention refers to a control circuit equipped with heating or cooling devices, particularly for direct current fans. With reference to this type of application, the present invention has been provided to solve the forced ventilation problem in cooling systems, by means of direct current fans equipped with brushless motors.

The technical limit when using these types of fans is the low operating temperature, taking into account that the control semiconductor-type logic does not provide reliability guarantees already starting from minimum temperatures of -30 °C.

With the current state of the art, in applications in which forced ventilation systems operating at low temperatures are necessary, fans are used that are equipped with asynchronous induction motors. In this way, the electronic device part is completely removed, allowing to operate down to the lowest allowed temperatures for the mechanics (bearings).

The disadvantages of this system are:
- A higher cost of fans equipped with induction motors, since the realisation of an asynchronous motor is more cumbersome, and mostly not yet automated in the current state of the art.
- A reduced working section for making air pass, with equal sizes of the venting system (or any fluid one is interested to pump), since also in its best execution an asynchronous motor anyway has much bigger sizes with respect to a brushless motor with the same performance.
- A lower efficiency, that is very bad, since it results in a power loss as heat, such event being rather dangerous inside a refrigerating apparatus.
- It is impossible to adjust the motor speed (which instead is often useful in modern refrigerating systems, to optimise their operation), unless very costly inverter systems are used to be externally applied.
- Since the electronics (and therefore any sensor) is completely missing inside the motor, it is not possible from the outside to know whether the system is operating or not, which instead is possible with a brushless motor. This too would be an extremely advantageous improvement for refrigerating systems, since when there is humidity, often the ice that is formed on the blades can get to completely block the motor.

Another possible solution to the problem of applying a brushless motor to ventilation systems for low temperatures, is taking outside the whole electronic part, connecting thereto only those windings left inside. This however implies enormous practical disadvantages, since the wires to be connected are approximately ten, and are passed by high-frequency signals: therefore, in addition to the solution cost, the increase of radiated noises must also be taken into account, in addition to a reduction of RF immunity (unless costly shielding systems are used). Lastly, it is not possible to take outside the Hall-effect position sensor, also limited as regards its operating temperature, since it is made of semiconductor material.

Object of the present invention is solving the above prior-art problems, allowing to produce ventilation systems with brushless motors equipped with internal electronics, also for different applications from the refrigerating ones, but characterised by low limit operating temperatures, such as for example aeronautical, criogenic, medical applications and the like, and campaign instruments to be used in cold climates. Particularly in this latter case the "cold starting" characteristic is fundamental to allow using these fans as forced convection elements in quick heating systems.

A further object of the invention is providing a quick defrosting system, to solve the ice formation problem when, together with low temperature, there is humidity (for example in refrigerating banks for ice creams).

The above and other objects and advantages of the invention, as will appear from the following description, are obtained by a control circuit as claimed in Claim 1 or 10 and by a fan as claimed in Claim 13. Preferred embodiments and non-trivial variations of the present invention are claimed in the dependent Claims.

The present invention will be better described by some preferred embodiments thereof, given as a nonlimiting example, with reference to the enclosed drawings, in which:
- Figure 1 is a perspective view of an embodiment of a basic circuit without the device according to the present invention;
- Figure 2 is a perspective view of the circuit in Fig. 1 with a biased heater;
- Figure 3 is a perspective view of the circuit in Fig. 1 with an externally controlled heater;
- Figure 4 is a perspective view of the circuit in Fig. 1 with a heater and a temperature probe;
- Figure 5 is a perspective view of the circuit in Fig. 1 in its configuration with complete control;
- Figure 6 is a perspective view of the circuit in Fig. 1 in its configuration with complete internal control;

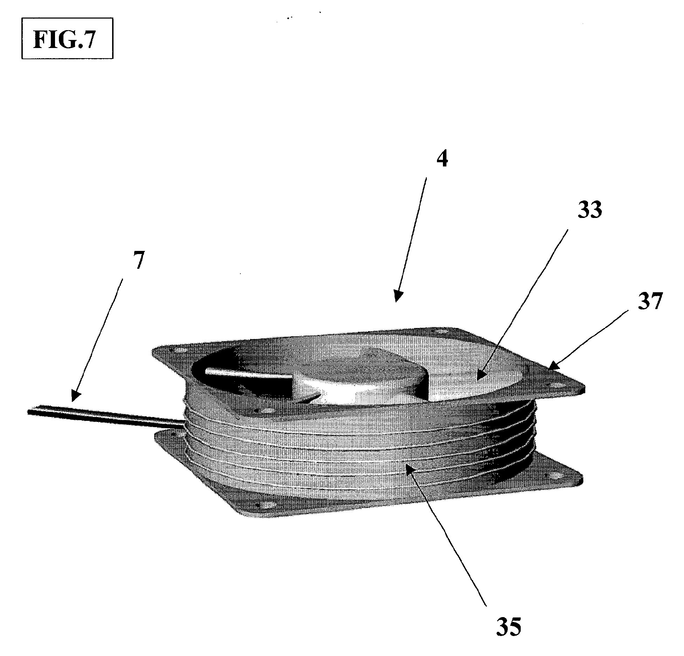

- Figure 7 is a side perspective view of a fan to which the device of the invention is applied;

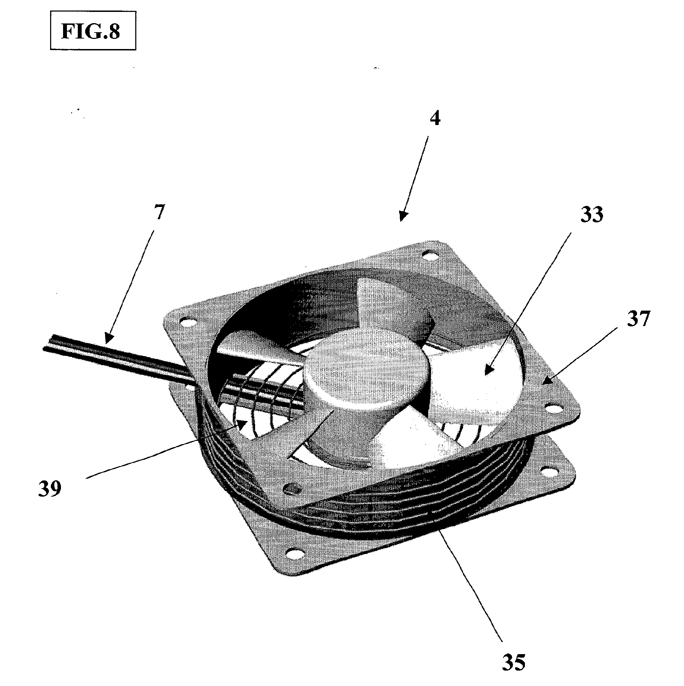

- Figure 8 is a side perspective view of another fan to which the device of the invention is applied;

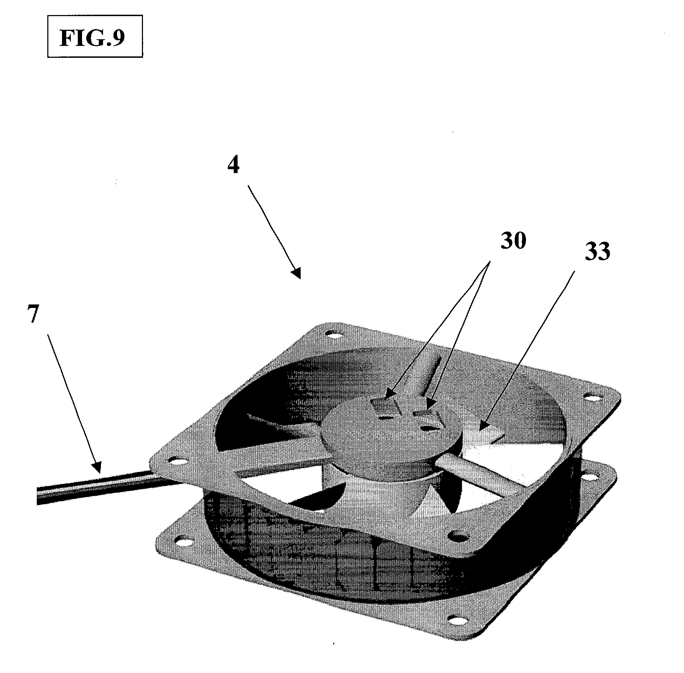

- Figure 9 is a bottom perspective view of a fan to which the device of the invention is applied, without an applied device; and

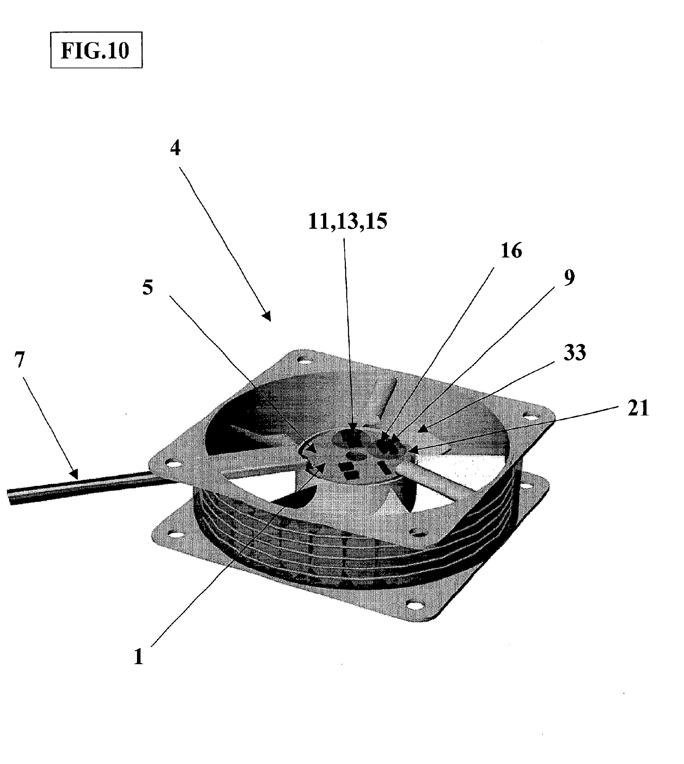

- Figure 10 is a bottom perspective view of the fan to which the device of the invention is applied, with an applied device.

With reference to the Figures, a preferred embodiment of the control circuit of the present invention is shown and described. It will be immediately obvious that numerous variations and modifications (for example related to shape, sizes, various colours and parts with equivalent functionalities) could be made to the described circuit without departing from the scope of the invention as appears from the enclosed claims.

With reference to the Figures, the control circuit (1) of the present invention, adapted to be used particularly for direct current fans (4), substantially comprises a basic circuit (5) equipped with a plurality of external wires (7) and containing:
- at least one microprocessor (9); and
- a plurality of active components (11), (13) and (15), like driving transistors, diodes and magnetic or optical sensors (for example Hall-effect type or photodiodes) .

The main characteristic of the control circuit (1) of the invention is that it further comprises at least one heating element (16) or at least one cooling element (not shown) installed in narrow contact with the microprocessor (9) and/or the active components (11, 13, 15).

The final practical result of the invention has been reached by taking into account that the delicate part of a ventilation system (4), based on a brushless motor, is only the control electronics, and in particular its active components (11, 13, 15) (components that due to the modern integration are more and more often a single one). It has been thought to solve this problem by injecting the necessary heat only in critical points.

The critical points are, in order:
- microprocessor (9) (typical minimum temperature, minus 30 °C)
- possible other active but slow (limit silica temperature, about minus 55 °C) components (11, 13, 15)

The majority of venting system would operate in the range between -30°C and -55°C: therefore, in its preferred application, it is enough that the concentrated heating system thermostats the microprocessor.

The invention, therefore, in a first preferred embodiment thereof, is composed of one or a plurality of heating elements (16), installed in narrow contact with the critical component or components. This thermal contact can be improved by using as propagating means a suitable thermally conductive and electrically insulating paste (not shown) that is commonly used in electronics. Another improvement of the thermal contact is obtained through a layer of heat insulation (21) (that in its preferred embodiment is a polyurethan foam) whose purpose is thermally insulating the component to be thermostated from the external environment, and therefore reducing the necessary power for its control (even under the most stringent tests, at -100°C, it has been demonstrated that with a suitable insulating layer, a few hundreds of mW are enough to obtain the required result), and possible (but not compulsory) sensor systems are provided for detecting the temperature inside the thermostated cell, in which such sensor systems are adapted to close suitable reaction rings aimed to better control the temperature and/or to reduce the necessary power for heating.

With the same basic principle, it can be thought to realise a control circuit (1) adapted to work at high temperatures, instead of low temperatures. In this case, in place of heating elements, serpentines (not shown) would be inserted that enable the circulation of suitable cooling liquids, or suitably insulated heat pipes adapted to take the heat itself outside.

Cooling fans (4) with brushless motors are largely manufactured in Asia in high numbers: therefore, given the low cost of these products in their standard version, it is extremely important that it is possible to recondition them with low intervention costs and as far as possible automatically. Among other things, this is one of the reasons that impair the above-mentioned arrangement with external electronics.

Due to the way in which these objects are realised and due to the arrangement that is normally occupied by the electronics inside them, it is easily and automatically possible to realise suitable millings (30) in the plastic case next to the components to be thermostated, and to insert here the heating elements (16), annealing and consolidating everything with the polyurethan foam, always automatically inserted. With this type of working, it is thereby possible to provide an end product with reduced costs.

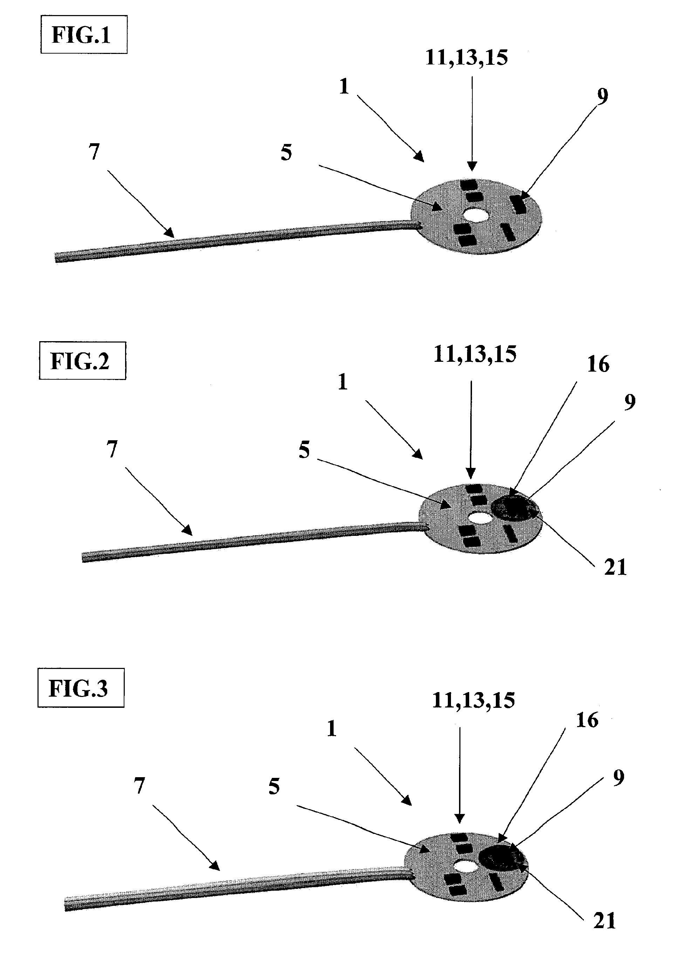

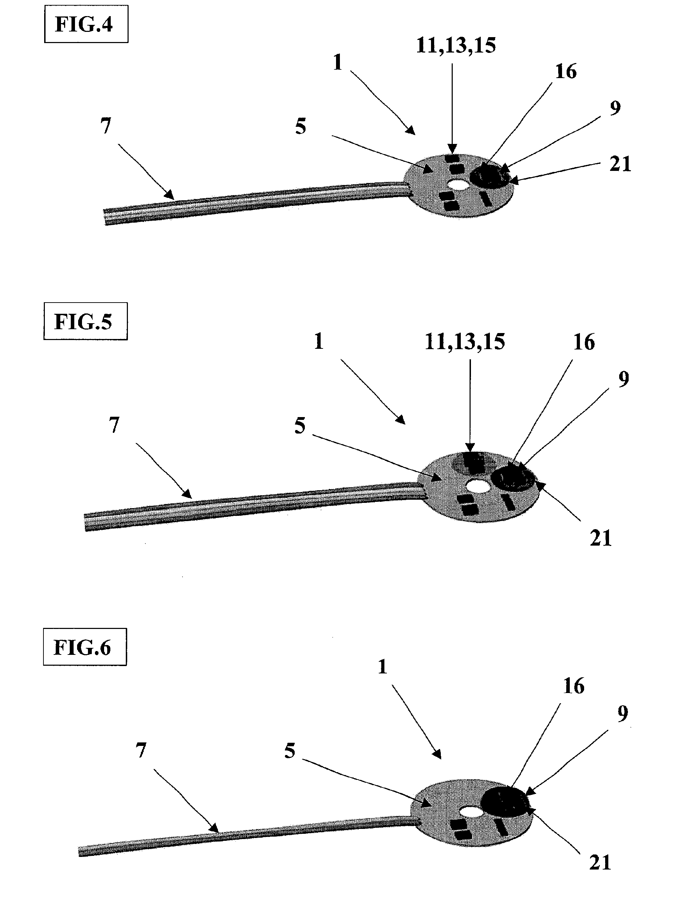

With this technique, the following types of control circuits (1) can be produced:
- Circuit (1) with biased heater (Fig. 2): it is characterised in that it has two wires (7) only, but the heater (16) that is reverse biased with respect to the fan (4) electronics. In this way, by directly supplying the system, it operates normally, and the electronic component (16) heating is solely assigned to its self-consumption and to the "coverage" (21) made of insulating material; by reversely supplying it when waiting, the fan (4) stops, but the heating elements (16) go on keeping the critical components (9, 11, 13, 15) under temperature. It is also possible to completely remove the supply during long stop periods, and then the system starting will occur with a first heating step lasting a few minutes and a following system starting.
- Circuit (1) with externally controlled heater (Fig. 3), with similar performance to the previous one but characterised in that it has at least three wires (7), since the connection with the heating elements (16) is directly taken outside.
- Circuit (1) with heater and temperature probe (Fig. 4), characterised in that it has an internal temperature probe (not shown) that is able to be read by a suitable external control electronics (not shown) in order to optimise the heating.
- Completely controlled circuit (Fig. 5), in order to reach the lowest temperatures, where also the other components cease to operate. In this case all active components (9, 11, 13, 15) are thermostated.
- Internal completely controlled circuit (Fig. 6), where the thermal control is always care of the internal microprocessor (9), and the active components (11), (13), (15) are concentrated in the same area (in such a way as to create a single thermostating point in any case) and a device is realised that is anyway with two wires (7) only, simplifying its installation by the end user.

Moreover, to avoid that ice that is formed on the blades (33) can block the fan (4), it has been thought to insert heating elements (35) to be occasionally activated to remove the ice itself.

The thermal energy inserted in the refrigerating system (in which the fan (4) finds one of its common applications), in general, will be as smaller as quicker is the defrosting time. Therefore, absurdly, it is convenient to insert highly powered heating elements (35), in order to reduce the defrosting cycle to a few tens of seconds.

Realising the blades (33) in plastic material is convenient, since due to the small thermal capacity and the low thermal conductivity thereof, it is possible to generate a quick surface heating, without having to take care of melting all ice, that at that time will be detached by itself.

One of the possible solutions for the defrosting system is a heating band (35) external to the case (37) and thermally insulated from the outside: this solution allows avoiding ice formation in the most dangerous point, namely the small space being present between blades (33) and fan (4) Venturi. Other previous technical solutions provided an increase of space between blades (33) and case (37), but by doing so aerial-hydraulic performances of the fan (4) were highly impaired.

This solution is particularly well adapted to not-excessive humidity conditions, so that the ice formation on blades (33) does not reach such thicknesses as to stall them or even more closes the spaces between one blade (33) and the other. In order to remove ice also under these conditions, a high-temperature (a few hundreds of degrees) radiating "grid" (39) will he used, to directly heat the blades (33) by radiance in a few seconds, thereby limiting the inserted energy and generating the immediate ice detachment.

This solution could also find use without modifications in case the fan (4) has to be used for a quick heating of circuits to be used in cold climates. Currently, in order to heat, before starting, systems that are not only electronic systems in cold climates, heating bands are used, that, in addition to their encumbrance, are slow to start operating. With this solution, these systems can be equipped with a fan (4) that is able to:
- autonomously start at very low temperatures due to the internal electronics heating
- generate a quick system heating by using the defrosting grid (39) as a heater
- be used afterwards as a traditional venting system for cooling the circuit
- realise very high cost savings.

## Claims

1. Control circuit (1), particularly for direct current fans (4), comprising a basic circuit (5) equipped with a plurality of external wires (7) and containing:
- at least one microprocessor (9); and
- a plurality of active components (11), (13) and (15), like driving transistors, diodes and magnetic or optical sensors (for example Hall-effect type or photodiodes);
**characterised in that** it further comprises at least one heating element (16) installed in narrow contact with said microprocessor (9) and/or said active components (11, 13, 15).

2. Control circuit (1) according to Claim 1, **characterised in that** at least one heating element (16) is composed of electric resistances welded onto the basic circuit (5) near the components (9), (11, 13, 15) to be heated.

3. Control circuit (1) according to Claim 1, **characterised in that** it further comprises a heat insulating layer (21) whose purpose is thermally insulating the component (9), (11, 13,15) to be thermostated from the external environment, and reducing the necessary power for control.

4. Control circuit (1) according to Claim 3, **characterised in that** said heat insulating layer (21) is made of a polyurethane foam.

5. Control circuit (1) according to Claim 1, **characterised in that** it further comprises a thermally conductive and electrically insulating paste as propagation means adapted to improve the thermal contact between heating elements (16) and components (9, 11, 13, 15) to be heated.

6. Control circuit (1) according to Claim 3 or 4, **characterised in that** it further comprises sensor systems to detect the temperature inside said heat insulating layer (21), said sensor systems being adapted to close corresponding reaction rings in order to perform a temperature check and/or a reduction of the necessary power for heating.

7. Control circuit (1) according to Claim 1, **characterised in that** said circuit (1) is equipped with at least three wires (7), the connection for said heating elements (16) being taken directly outside.

8. Control circuit (1) according to Claim 1, **characterised in that** said circuit (1) further has an internal temperature probe that is able to be read by an external control electronics to optimise heating.

9. Control circuit (1) according to Claim 1, **characterised in that** the thermal control is always care of said internal microprocessor (9), and active components (11, 13, 15) are concentrated in the same area, in order to create in any case a single thermostating point.

10. Control circuit (1), particularly for direct current fans (4), comprising a basic circuit (5) equipped with a plurality of external wires (7) and containing:
- at least one microprocessor (9); and
- a plurality of active components (11), (13) and (15), like driving transistors, diodes and magnetic or optical sensors (for example Hall-effect type or photodiodes);
**characterised in that** it further comprises at least one cooling element installed in narrow contact with said microprocessor (9) and/or said active components (11, 13, 15).

11. Control circuit (1) according to Claim 10, **characterised in that** at least one cooling element is composed of a serpentine with refrigerating substances circulation.

12. Control circuit (1) according to Claim 10, **characterised in that** at least one cooling element is composed of a suitably-insulated heat pipe adapted to take heat outside.

13. Direct current fan (4), particularly for refrigerator applications, **characterised in that** it comprises a control circuit according to any one of Claims 1 to 9, and **in that** it is further equipped with a further defrosting element (35) adapted to remove ice formations on blades (33) of said fan (4).

14. Fan (4) according to Claim 13, **characterised in that** said defrosting element (35) is composed of a heating band (35) external to the case (37) of said fan (4) and thermally insulated from the outside.

15. Fan (4) according to Claim 13 or 14, **characterised in that** it is further equipped with a high-temperature radiating grid (39) adapted to directly heat the blades (33) of the fan (4) by radiance, limiting the inserted energy and making ice immediately detach.
